# EUROPEAN PATENT APPLICATION

(11) **EP 4 794 308 A1**
(43) Date of publication of application: **19.08.2026**
(21) Application number: 26159420.4
(22) Date of filing: 18.02.2026
(51) Int. Cl.: H04L 67/55, H04L 67/562

(54) **AGENT AND MANAGEMENT SYSTEM FOR A MESSAGING SYSTEM**

(30) Priority: 18.02.2025 US 202519056441
(71) Applicant: HiveMQ GmbH, 84028 Landshut (DE)
(72) Inventor: JOHNSON, Simon, 84028 Landshut (DE); MCCUNE, Magnus, 84028 Landshut (DE)
(74) Representative: EIP

(57) **Abstract**

A method performed at a management system of a publish/subscribe messaging system comprising determining processing to be carried out in respect of messages within the publish/subscribe messaging system, selecting one or more agents within the publish/subscribe messaging system to perform the processing, and transmitting to the one or more agents respective instructions which cause the one or more agents to perform the processing in respect of the messages.

## Description

### BACKGROUND OF THE INVENTION

### Field of the Invention

The present disclosure relates to the operation of an agent and a management system associated with a messaging system.

### Description of the Related Technology

In order to coordinate the communication of data between numerous data sources and entities which make use of that data, a data broker may act as an intermediary by maintaining a record of subscriber clients who wish to receive data transmitted by publisher clients (which may be, for example, sensor data generated at a remote device). The use of a data broker can produce a faster and more efficient communication system, by eliminating the need for direct communication between the publisher and subscriber clients.

A feature of a publish/subscribe architecture is that a publisher client may not be aware of the identity, or even existence, of any subscriber client which has established a connection for its published data. This can reduce the complexity of operation of a publisher client, compared to a device which is required to establish and maintain connections with all devices to which its data is transmitted.

In accordance with a publish/subscribe messaging protocol, a data broker may forward (i.e. publish) received data towards subscriber clients without modifying this data. This means that high volumes of data can be efficiently handled by a data broker, which can maintain connections for the receipt and transmission of data with many publisher clients and subscriber clients. However, this can result in large volumes of data traffic being sent between publisher clients and subscriber clients. Furthermore, the subscriber client has only the option of subscribing to a raw data feed, or not subscribing to that data. This may result in the subscriber client receiving either some data which it does not require, or data in a form which requires it to perform further processing.

### SUMMARY

Examples disclosed herein provide a method comprising determining, at a management system of a publish/subscribe messaging system, processing to be carried out in respect of messages within the publish/subscribe messaging system, selecting one or more agents within the publish/subscribe messaging system to perform the processing, and transmitting to the one or more agents respective instructions which cause the one or more agents to perform the processing in respect of the messages.

The present disclosure also provides a method comprising determining at a management system of a publish/subscribe messaging system a plurality of nodes in an information hierarchy, the nodes corresponding to respective data streams whose respective data is transmitted via the publish/subscribe messaging system, the location of a node corresponding to a data stream in the information hierarchy being in accordance with a relative location of a data source, associated with the data stream, within a topology representing an arrangement of data sources, and associating, with each node, a node type selected from a set of pre-defined node types, each of the set of pre-defined node types defining one or more parameters.

A further method provided by the present disclosure comprises determining at an agent in a publish/subscribe messaging system mapping information defining the encoding of data, encoded within a payload of a message, determining, based on the mapping information, whether a payload of a message contains the data, wherein the publish/subscribe system comprises a data broker which receives and publishes messages in accordance with a publish/subscribe messaging protocol, a publisher client which publishes messages in accordance with the publish/subscribe messaging protocol, and the agent.

Also provided are corresponding systems.

Examples disclosed herein can provide an improved messaging system. In some examples, data can be processed within the messaging system. In some examples, the efficiency of the messaging system can be improved and processing required at subscriber clients or other receivers of data can be reduced. Examples can provide an improved representation of data sources within a system. The information hierarchy can be used as a basis for defining processing within a system.

Further features and advantages will become apparent from the following description of implementation details, given by way of example only, which is made with reference to the accompanying drawings.

### BRIEF DESCRIPTION OF THE DRAWINGS

Figure 1 shows, schematically, an arrangement of equipment in a system in which examples of the present disclosure may be deployed.
Figure 2 shows an example of a portion of an information hierarchy corresponding to the system shown in Figure 1 in accordance with examples of the present disclosure.
Figure 3 illustrates examples of the use of agents in the context of the information hierarchy to implement processing of messages in accordance with examples.
Figure 4 shows an example of mapping information for nodes in an information hierarchy, in accordance with examples of the present disclosure.
Figure 5 is a combined process and message sequence diagram showing an initial configuration of an agent in accordance with examples of the present disclosure.
Figure 6 shows a combined process and message sequence diagram of an example deployment of a process, in accordance with examples of the present disclosure.
Figure 7 is a simplified network diagram showing some of the elements shown in Figure 1, arranged in accordance with examples of the present disclosure.
Figure 8 is a simplified block diagram of a data broker system in accordance with examples.
Figure 9 is a simplified block diagram of an edge publisher system in accordance with examples.
Figure 10 is a simplified block diagram of a management system in accordance with examples.

### DETAILED DESCRIPTION OF CERTAIN INVENTIVE EMBODIMENTS

Details of systems and methods according to examples will become apparent from the following description with reference to the figures. In this description, for the purposes of explanation, numerous specific details of certain examples are set forth. Reference in the specification to 'an example' or similar language means that a feature, structure, or characteristic described in connection with the example is included in at least that one example but not necessarily in other examples. It should be further noted that certain examples are described schematically with certain features omitted and/or necessarily simplified for the ease of explanation and understanding of the concepts underlying the examples.

Examples of the present disclosure relate to processing messages in a messaging system. Some examples described herein can improve the flexibility, efficiency and latency of a publish/subscribe messaging system.

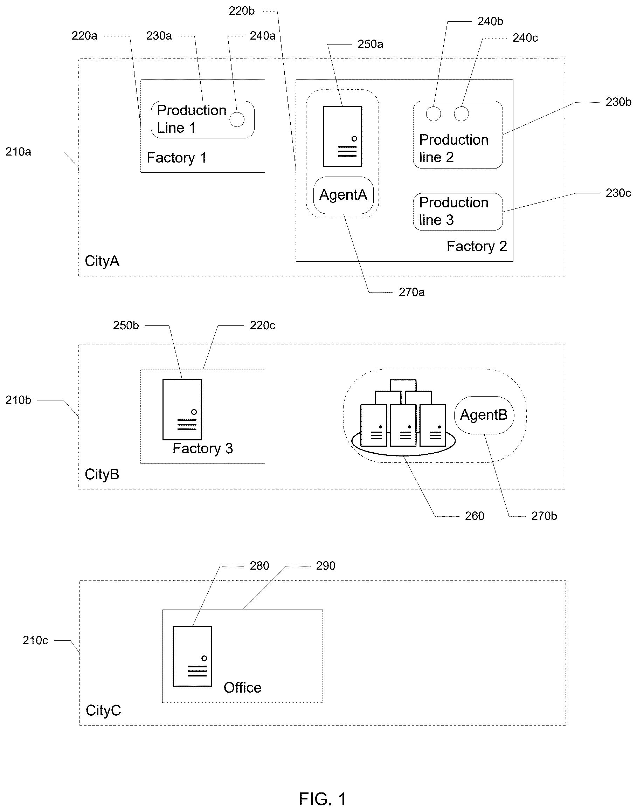

An example of a system in which examples of the present disclosure may be deployed is shown in Figure 1.

Figure 1 shows, schematically, an arrangement of equipment associated with an example organization 'Mfgco'. The equipment of the organization is arranged within three geographical regions 210a-c, which are referred to as CityA, CityB and CityC.

Within the CityA region 210a there are two sites, 220a, 220b (called 'Factory1' and 'Factory2') and within the CityB region 210b there is one site 220c called 'Factory3'. Equipment at the 'Factory3' site 220c is not shown in Figure 1. An office 290 is located in the CityC region 210c.

At some of the sites, production lines operate. In the example of Figure 1, one production line 230a ('Production line 1') operates within the 'Factory1' site 220a and two production lines 230b, 230c ('Production line 2', 'Production line 3') operate within the 'Factory2' site 220b.

Sensor devices 240 operate to monitor the status of some of the production lines 230. Specifically, a first sensor device 240a measures a temperature, a flow rate and a cumulative volume on the 'Production line l' production line 230a. A second sensor device 240b and a third sensor device 240c measure, respectively, a flow rate and a temperature on the 'Production line 2' production line 230b.

The sites 220, production lines 230, and sensor devices 240 collectively are related to the primary operations of the example organization 'Mfgco' and are accordingly referred to herein as the 'operations system'.

In addition to the operations system, a publish/subscribe messaging system is deployed in the example organization of Figure 1.

In general, a publish/subscribe messaging system comprises a publish/subscribe data broker, one or more publisher clients and one or more subscriber clients. In some examples of the present disclosure, there may be no subscriber clients.

A data broker receives messages published by publisher clients, determines whether each message falls within the scope of a subscription associated with a subscriber client and, if so, forwards a copy of the message to the subscriber client. The transmission of messages within the publish/subscribe system may be in accordance with a publish/subscribe messaging protocol, such as MQTT or MQTT-SN.

Other control packets may be sent between publisher clients or subscriber clients and the data broker. These may be in accordance with the messaging protocol. These may be for the purpose of establishing, maintaining, or closing a connection between a client and the data broker, or for the purpose of creating, modifying, or cancelling a subscription of a subscriber client.

A client in the publish/subscribe messaging system may be simultaneously a publisher client and a subscriber client. In some examples, there may be more than one data broker.

The publish/subscribe messaging system may enable the communication of data between other entities in the system. Messages published by a publisher client may comprise a representation of data generated at a data source. Sensor devices (such as the sensor devices 240 in Figure 1) which measure physical properties (e.g., temperature, pressure, flow rate, electrical voltage) are examples of data sources, and the measurements are examples of the data. However, the present disclosure is not so limited.

A data source may generate one or more 'data streams', each data stream comprising one or more data points of a particular type. For example, a weather sensor may generate a temperature data stream, comprising temperature measurements every minute and a pressure data stream, comprising atmospheric pressure measurements every 10 minutes.

A data source may be integrated together with a publisher client ('integrated publisher client'), in which case the data source itself publishes messages indicating data, and forms part of the publish/subscribe messaging system.

Alternatively, a data source may transmit information representing the data to an 'edge publisher client'. The edge publisher client receives the information from the data source and generates and publishes messages representing the data in accordance with the publish/subscribe messaging protocol.

An edge publisher client can allow the use of the publish/subscribe messaging system for the transmission of data generated at a data source which is not part of the publish/subscribe messaging system. This may be because the data source is not capable of directly connecting to the data broker and/or does not support the publish/subscribe messaging protocol. An edge publisher client may be connected to multiple data sources.

Messages may comprise a topic and a payload. The topic may be used by subscriber clients to indicate a scope of a subscription. In some examples, a topic of a message identifies a data source which generated the data which is indicated in the payload of the message. The publish/subscribe messaging protocol may impose requirements on the format of the topic. In some examples, a data stream is associated with a single topic, so that the topic indicates the data stream whose data is included in a message. In some examples, data from multiple data streams is included in a single payload.

In the example organization 'Mfgco' shown in Figure 1, an enterprise publish/subscribe messaging system operates in accordance with a publish/subscribe messaging protocol such as MQTT or MQTT-SN. The publish/subscribe messaging system comprises a data broker 260 and edge publisher clients 250. The first sensor device 240a is capable of communicating in accordance with the publish/subscribe messaging protocol and operates as an integrated publisher client.

The data broker 260 is in operation within the CityB region 210b. The first edge publisher client 250a and second edge publisher client 250b are deployed, respectively, within the 'Factory2' site 220b and within the 'Factory3' site 220c. The first edge publisher client 250a is connected to the second sensor device 240b and the third sensor device 240c, and generates messages based on data generated by the second sensor device 240b and the third sensor device 240c. The second edge publisher client 250b is connected to devices within the 'Factory3' site, not shown in Figure 1.

The edge publisher clients 250 and integrated publisher client 240a can connect to the data broker 260 via any suitable communications network, and the communications network may be formed of any suitable communications links, which may operate in accordance with suitable protocols. For example, the communications network may comprise one or more of a wireless cellular network, a wireless local area network, a wired local area network and a wide area network. The publish/subscribe messaging protocol may impose minimum requirements on the capability of the communications network. For example, where the publish/subscribe messaging protocol is MQTT or MQTT-SN, the communications network may support internet protocol, IP, based communication. Accordingly, in some examples, the data broker 260 comprises an MQTT server, and the first edge publisher client 250a, second edge publisher client 250b and integrated publisher client 240a may comprise MQTT clients.

No subscriber clients are shown in the example of Figure 1; however it will be appreciated that one or more subscriber clients may be present in examples.

Publish/subscribe messaging systems are designed to efficiently transfer large quantities of data within or between organizations, and such systems can be scaled to support very large numbers of data sources, data streams (and associated publisher clients), and subscriber clients. However, systems which make use of the data may have to be suitable for receiving and processing large volumes of data at a very high rate. Where the data is received in a form which requires further processing, this can require significant processing capabilities at the receiving device.

There is therefore a need to provide an improved publish/subscribe messaging system.

In examples of the present disclosure, a management/agent system is provided as part of the publish/subscribe messaging system. The management/agent system comprises one or more agents, and a management system.

An agent has access to messages within the publish/subscribe messaging system and is capable of processing messages within the publish/subscribe messaging system. Examples of such processing include:
- extracting information from a message (the information may be within the topic or payload of a message);
- modifying the payload of a message;
- generating and transmitting a new message;
- destroying a message (i.e., preventing onward publication of the message, irrespective of any subscription that would include the message in its scope); and
- performing processing operations on the extracted information from one or more messages.

An agent communicates with the management system. In some examples, the agent and management system are themselves clients of the publish/subscribe messaging system and use the publish/subscribe messaging system to communicate. However, the present disclosure is not so limited, and any suitable communication technique may be used.

Co-pending patent application Serial No. 19/056,386, entitled PUBLISH/SUBSCRIBE MESSAGING SYSTEM CLIENT AND DATA BROKER, AND SERVICE CLIENT describes a system for a behavior model deployed at a data broker. Collectively, the behavior model run time function and behavior model manager and associated memory described therein are an example of an agent in the present disclosure. System clients described in Serial No. 19/056,386, entitled PUBLISH/SUBSCRIBE MESSAGING SYSTEM CLIENT AND DATA BROKER, AND SERVICE CLIENT are examples of the management system of the present disclosure.

In examples of the present disclosure, there may be two or more agents in the management/agent system.

An agent may be associated with an edge publisher client or a data broker. An agent associated with an edge publisher client may generally have access to, and may be able to process, messages generated at the edge publisher client. An agent associated with a data broker may generally have access to, and may be able to process, messages generated at (including those forwarded in accordance with a subscription) or received at, the data broker.

An agent may be a standalone agent which has access to, and can process, messages passing through a particular point in the communications network which connects other elements of the publish/subscribe messaging system.

In the example of Figure 1, a first agent 270a ('AgentA') is associated with the first edge publisher client 250a, and a second agent 270b ('AgentB') is associated with the data broker 260. Accordingly, the first agent 270a is able to monitor messages generated at the first edge publisher client 250a and can perform other processing based on the data that is, or could be, represented in messages generated by the first edge publisher client 250a. The second agent 270b, being associated with the data broker 260, is able to monitor all messages received at, or generated at the data broker 260 and can accordingly process messages at the data broker 260.

The first agent 270a and the second agent 270b are connected to a management system 280. The management system 280 may provide a user interface either directly at the management system 280, or indirectly (for example, by providing a web server function to a web client, where the user interface is generated at the web client based on data generated at the web server of the management system 280).

Processing at an agent 270 may be in accordance with instructions generated at the management system 280.

In the example of Figure 1, there is only a single management system 280 shown. However, in other examples, there are two or more management systems.

In examples of the present disclosure, an information hierarchy is used.

The information hierarchy comprises a hierarchical arrangement of two or more nodes. A node may correspond to a physical entity in the system, or a data stream. For example, a node may represent a particular data source.

Within the hierarchy, one or more nodes at a particular level may be arranged as child nodes of a parent node at a higher level. Each node may have exactly one immediate parent node and may have one further parent node at each layer of the hierarchy which is higher than that of its immediate parent node. In the present disclosure, a 'child node' of a particular node refers to a node which i) is at a layer of the information hierarchy which is lower than the layer in which the particular node is located and ii) is within the portion of the information hierarchy whose root node is the particular node.

A node may represent a category of nodes, where the child nodes of the 'category' node fall within the respective category definition. Examples of categories of nodes include a location or region within which other nodes are located. These categories may be hierarchical. For example, the child nodes of a site node may be those nodes corresponding to data sources which are located at that site. The child nodes of an enterprise node may be all of the nodes which are associated with an enterprise; this may include one or more site nodes and the child nodes of those factory nodes.

Accordingly, an information hierarchy of nodes can be defined, where the location of a node corresponding to a data stream in the information hierarchy corresponds to a relative location of a corresponding data source in a topology of data sources. The topology may define a physical location of a data source, such as within geographic regions, sites, buildings, floors, groups of equipment or production lines. In general, the topology may be any suitable representation of the data sources and may indicate a logical arrangement of data sources, a physical location of data sources, or a combination of both. For example, a topology of data sources associated with consumer products may indicate a physical location of a data source within a world region and, at a lower layer, a logical grouping of data sources associated with a particular brand, and at yet a lower layer, a logical grouping of data sources associated with a particular device model.

In general, the hierarchy may reflect the topology, in that successively lower levels in the information hierarchy correspond to successively finer granularity. A data stream node may be a child node of a data source node. A 'derived' data node may be a child node of a data stream node; for example, a node corresponding to a data stream of pressure measurements may have child nodes corresponding to a maximum value, a minimum value, and a (windowed) average value of the pressure measurements.

In some examples, the information hierarchy is consistent with a hierarchy used in topics used in the publish/subscribe messaging system; that is, levels within the topic namespace correspond to levels in the information hierarchy disclosed herein, and nodes may correspond to components in the topic namespace.

In some examples, the information hierarchy does not correspond to the hierarchy used in topics in the publish/subscribe messaging system. For example, topics in the publish/subscribe messaging system may conform to a topic naming convention, such as that specified in the Sparkplug B version 1.0 specification, in which the topic hierarchy does not correspond to a topology as described above. In the example of Sparkplug B version 1.0, for example, a topic includes a message type and a group ID. The message type does not indicate a location of a corresponding data source, and the group ID may be encoded in an arbitrary manner - for example, it may comprise a sequentially allocated number irrespective of a location of a data source in the topology. In some examples, the topics have been manually configured at the data sources.

In some examples, the topics in the publish/subscribe messaging system comply with an ISA-95 standard. In some examples, topics in the publish/subscribe messaging system may be assigned using a combination of approaches.

In general, the topics used within the publish/subscribe messaging system may not be intuitive and/or may not indicate a relative location of a node (which may be a node associated with a data source or data stream) within a topology of an organization. Accordingly, examples of the present disclosure can provide a more intuitive and consistent representation of data streams and data sources within an organization. This can facilitate an improved user interface, in which a user can readily determine where, in a relevant topology of an organization, a data source or data stream is located and accordingly provides a basis for more readily specifying desired processing to be carried out in respect of messages within the publish/subscribe messaging system.

A node may be associated with a node type. A node type may define parameters associated with a node of that type. A node may be associated with a node identifier (e.g., a system-wide unique identifier of the node). A node type may therefore define parameters which include the node identifier in addition to one or more further parameters. One or more of the node types may be predefined node types. In some examples, all nodes are associated with a node type. In some examples, one or more nodes is not associated with a node type.

A data source node type may define parameters such as a data source manufacturer name and a data source model name. By way of example, a data stream node type may define parameters to indicate one or more of the type of data (e.g., temperature, pressure, voltage), unit of measurement, accuracy, and frequency of measurement. In some examples, values for all parameters associated with a node, according to its node type, are determined. In some examples, one or more parameter values are not determined for a node.

A node type for nodes that are higher in the information hierarchy may have parameters depending on a type of category. For example, a node type for a region node may have parameters which define a bounding region; a node type for a site node may have parameters which define a location of the factory.

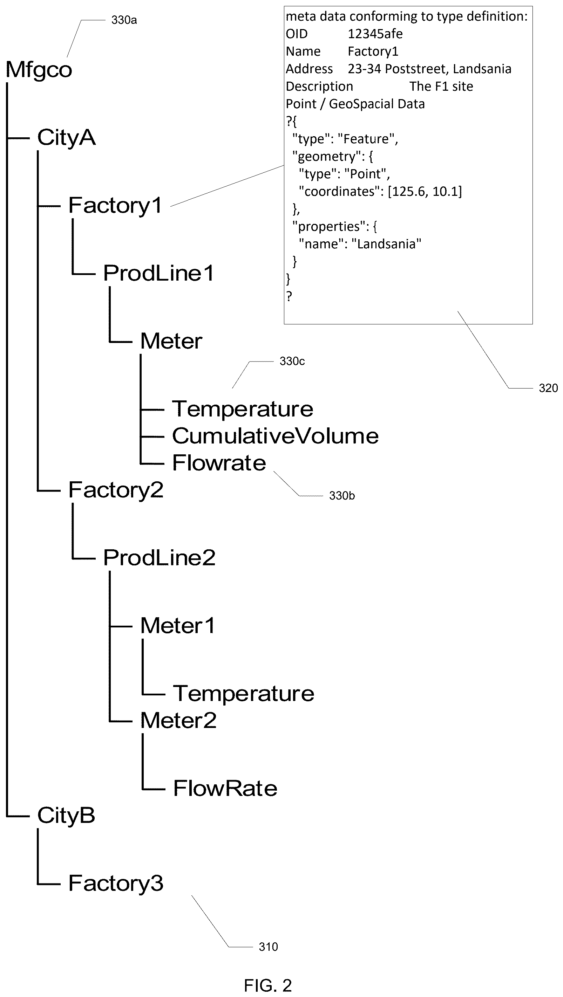

An example of a portion of an information hierarchy 310 corresponding to the organization Mfgco shown in Figure 1 in accordance with examples of the present disclosure is shown in Figure 2.

In the example of Figure 2, nodes 330 in the information hierarchy 310 are arranged in six hierarchical layers. At the highest layer, a root node 330a corresponds to the organization. A 'flowrate' node 330b corresponding to a single (flow rate) data stream is an example of a node at the lowest level.

In the example of Figure 2, meter node 330d corresponds to a meter data source (specifically, the first sensor device 240a). In some examples, a piece of equipment in the operations system, such as a data source, does not have a corresponding node. This can simplify a display of the information hierarchy and provide an improved user interface because, for example, a specific source of a data stream (e.g., the data source or sensor equipment) may not be of interest to a user of the management system 280. In some examples a node corresponding to each data source is included.

As described above, one or more (and preferably all) of the nodes 330 in the information hierarchy 310 are associated with a respective node type. By way of example, Figure 2 shows the parameter values (or 'meta data') associated with a 'Factory1' node 330c, which corresponds to the 'Factory1' site 220a shown in Figure 1. The 'Factory1' node 330c is associated with a 'site' node type, which defines the following parameters: object identifier ('OID'), Name, Address, Description, Point/Geospatial data. Values 320 of these parameters for the 'Factory1' node 330c are shown in Figure 2.

One or more parameter values associated with a node may be in the form of human-readable text. The user interface provided by the management system 380 may display the parameter values associated with a node in order to provide a user with relevant context and information about a particular node. The user interface may display the parameter values associated with a node together with a representation of the node. The node may be shown in context within the information hierarchy 310, for example together within one or more of its child nodes. Because the 'Factory1' node 330c is a category node, a user can readily recognize that parameter values of the 'Factory1' node 330c also apply to one or more of its child nodes. In some examples, a node is shown together with one or more of its parent nodes.

With reference to the example of Figure 2, a user interface display which shows some or all of the values 320 for the 'Factory1' node 330c together with the flowrate node 330b can indicate to a user that a cumulative volume measurement is measured on a 'ProdLine1' at a site whose address is 23-34 Poststreet, Landsania.

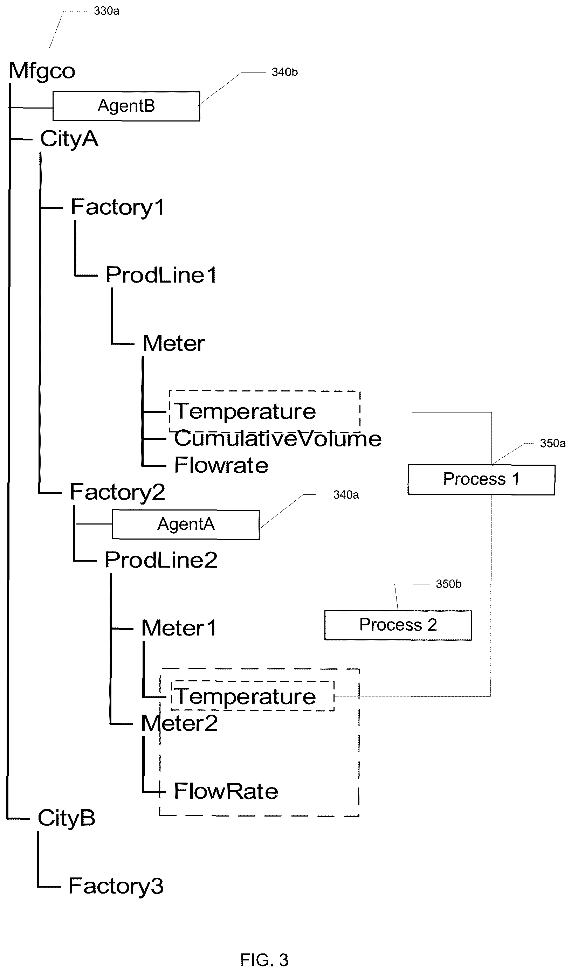

Figure 3 shows the information hierarchy 310 described above and illustrates examples of the use of agents 270 in the context of the information hierarchy to implement processing of messages in the publish/subscribe messaging system of Figure 1.

In accordance with examples of the present disclosure, an agent 270 may be represented by and/or associated with an agent node 340 in the information hierarchy 310. In some examples, the agent node 340 may be a child node of a parent node, in the case where the agent 270 is able to process messages carrying data associated with all data streams whose corresponding nodes are child nodes of the parent node.

In general, an agent may be associated with one or more data stream nodes whose data (in the form of messages) it is able to process. In some examples, the user interface provided by the management system 280 displays the association between an agent 270 and one or more nodes 330. This may be by displaying the associated agent node 340 within a portion, or all, of the information hierarchy 310.

In the example of Figure 3, a first agent node 340a corresponding to the first agent 'AgentA' 270a is shown in the information hierarchy as a child node of the node 330 corresponding to the 'Factory2' site 220b, because the first agent 'AgentA' 270a is associated with the first edge publisher client 250a; this is the only data source within the 'Factory2' site 220b, and the first agent 'AgentA' 270a is accordingly able to process messages carrying data generated by all data sources within the 'Factory2' site 220b.

Similarly, a second agent node 340b corresponding to the second agent 'AgentB' 270b is included within the information hierarchy 310 as an immediate child node of the root node 330a corresponding to the organization Mfgco, because the second agent 270b is associated with the data broker 260, through which all published messages in the organization pass. Accordingly, the second agent 270b is able to process data generated by all data sources within the organization.

The information hierarchy 310 and the nodes 330 therein may be used as the basis for defining a process to be performed at one or more agents 270.

Figure 3 shows, schematically, the scope of two example processes 350a, 350b which may be implemented by the management system 280 in accordance with examples of the present disclosure.

A first process 'Process 1' 350a is based on temperature data on both Production Line 1 230a (which is located in Factory 1 220a) and Production Line 2 230b (located in Factory 2 220b). According to the first process 350a, an alarm message is to be generated if either the 10-second average readings of the Production Line 1 temperature exceed a threshold, or if the 30-second average readings of the Production Line 2 temperature exceed the threshold.

As described further below, in accordance with examples of the present disclosure, the management system 280 determines that the first process 350a is to be implemented jointly at the first agent 'Agent A' 340a and at the second agent 'Agent B' 340b.

According to the second process 350b, flow rate data for the Production Line 2 230b is not needed and is therefore to be suppressed, unless the 30-second average readings of the Production Line 2 temperature exceed the threshold used for the first process 350a.

As described further below, in accordance with examples of the present disclosure, the management system 280 determines that the second process 350b is to be implemented solely at the first agent 'Agent A' 340a.

The determination of the first process 350a and the second process 350b may be by means of the user interface provided by the management system 280; for example, a user may enter, copy or upload human readable code that defines the first process 350a and the second process 350b, by reference to the relevant nodes 330 in the information hierarchy 310. It will be appreciated that, to define the first process 350a and the second process 350b, the user does not require any understanding or awareness of the manner in which temperature or flow rate data is generated and transmitted within the publish/subscribe messaging system.

As described above, an agent is deployed within a publish/subscribe messaging system and is configured to process messages within the messaging system. In some examples, the agent is provisioned with information of one or more nodes in the information hierarchy, and their associated respective type. In some examples, the agent is provisioned with mapping information to allow it to identify, based on a message in the messaging system, that the message contains data associated with a node in the information hierarchy, and to extract that data.

The agent may be provisioned with the arrangement of the nodes in the information hierarchy. The agent processes the messages based on the information associated with the one or more nodes.

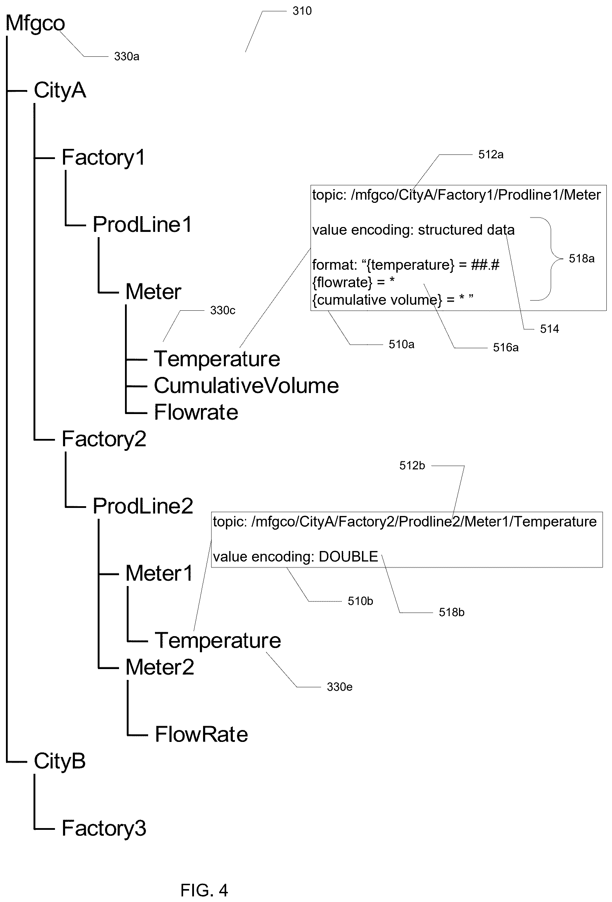

Figure 4 shows an example of mapping information for nodes, in accordance with examples of the present disclosure. Figure 4 shows the information hierarchy 310 and an example of first mapping information 510a for data stream node 330c, which relates to Temperature at Production Line 1. The first mapping information 510a comprises a first topic identifier 512a, a first value encoding 514a and a first format descriptor 516a. The first value encoding 514a and first format descriptor 516a are, collectively, an example of a first payload decoding rule 518a.

In the example of Figure 4, the first topic identifier 512a indicates a topic "/mfgco/CityA/Factoryl/Prodlinel/Meter" which is used for a published message indicating the temperature; the first format descriptor 516a indicates a location indicated by "##.#", within a message payload, of the encoded temperature value; and the first value encoding 514a indicates a method of encoding the temperature value within the payload.

In some examples, the mapping information may comprise only a topic identifier. In some examples, the mapping information may comprise only a payload decoding rule 518.

In some examples, the payload decoding rule may be provided in the form of instructions for extracting the relevant data from the message payload.

In some examples, there may be multiple mapping information 512 for a given node. For example, where a single data stream is published in different formats and/or using different topics, a mapping information 512 may be determined for each such format and topic combination, to ensure that all data associated with that data stream can be extracted.

As in the second example shown in Figure 4, the message payload may comprise only a single data point, and the payload decoding rule 518 may comprise a type definition for the data point.

In the second example shown in Figure 4, a second mapping rule 510b is shown for a Temperature node 330e. In this example, messages conveying the Temperature data points contain only numeric values, encoded using a pre-determined format, and no other contents. Accordingly, it is sufficient in this case to include in the second mapping rule 512b only a second topic identifier 512b and a second payload decoding rule 518b. The second topic identifier 512b indicates that the value corresponding to the node 330e is encoded within messages identified by the topic "/mfgco/CityA/Factory2/Prodline2/Meter1/Temperature". The second payload decoding rule 518b indicates that the value corresponding to the node is encoded as a 'DOUBLE' value. In this example, a DOUBLE value is pre-determined to correspond to an IEEE 754 double-precision floating-point value with 64bit (8 bytes).

A respective mapping rule may be determined for each of the data stream nodes in the information hierarchy 310.

The mapping rules 512 allow an agent 270 to determine that a message within the publish/subscribe messaging system includes a representation of data associated with a node 330 in the information hierarchy, to extract that data and, in some examples, to process that data. In an example, the second agent 270b extracts temperature data from messages using the first mapping rule 512a and the second mapping rule 512b shown in Figure 4 and, based on the extracted data, performs the first process 350a shown in Figure 3.

In examples of the present disclosure, an agent determines the mapping information associated with a node. The determination may be by receiving the mapping information from a management system. The agent determines, based on the mapping information, whether a message within the publish/subscribe messaging system comprises data associated with the node.

In some examples, in response to determining that the message comprises data associated with the node, the agent processes the message. The processing may be in accordance with processing instructions received from the management system.

In some examples, the agent determines a portion of an information hierarchy, the portion comprising the node.

In examples of the present disclosure, there is provided a method of configuring an agent in a publish/subscribe messaging system by a management system. The method comprises determining mapping information indicating how data corresponding to a node in an information hierarchy is conveyed in messages within the publish/subscribe messaging system, and transmitting to an agent in the messaging system the mapping information, the node corresponding to a data stream generated in an operations system.

In some examples, the method further comprises transmitting to the agent instructions for processing the data.

In some examples, the method comprising providing at a user interface a representation of at least a portion of the information hierarchy.

Because the information hierarchy 310 provides a logical representation of the various data streams within the organization, a more intuitive user experience can be provided. For example, a user wishing to evaluate a particular function or to define a particular process based on data does not need to be aware of details of the underlying publish/subscribe messaging system, or its operation, including the topics and payload formats used for messages carrying the data. A user is also not required to be aware of the relative location of data brokers, clients and agents within the publish/subscribe messaging system, with respect to each other or with respect to other equipment within the organization.

By providing the agent with the mapping rule, the agent is able to extract data from the appropriate messages, which corresponds to the node in the hierarchy and to perform processing of the data. The use of the mapping rule allows this processing to be carried out, irrespective of the manner in which the data is transmitted within the publish/subscribe messaging system.

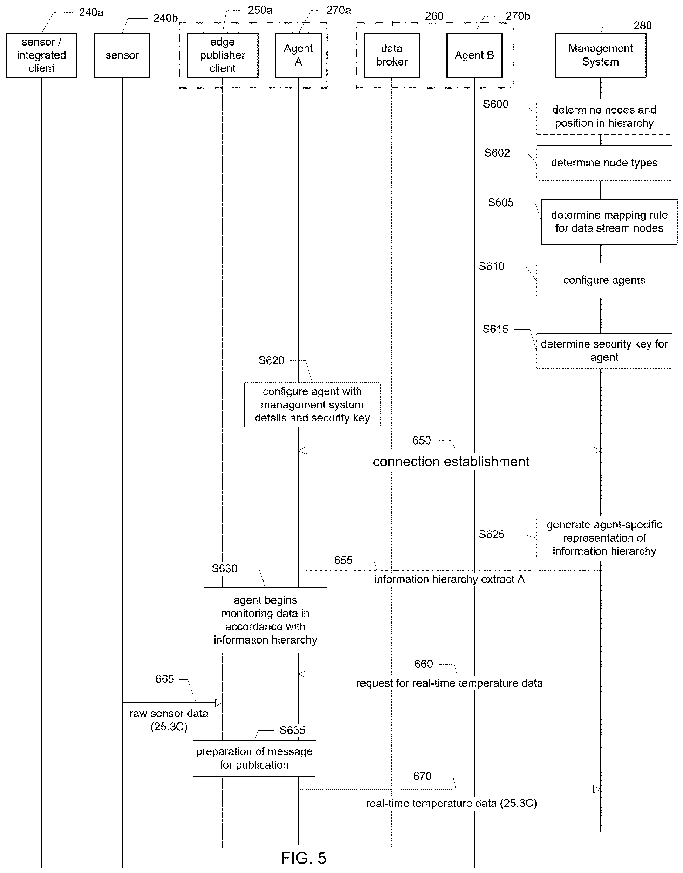

Figure 5 is a combined process and message sequence diagram showing an initial configuration of an agent, in accordance with examples of the present disclosure.

The process starts at step S600, in which one or more nodes in the information hierarchy are identified and their relative positions in the information hierarchy determined. In the example of Figure 3, the determined information hierarchy is the information hierarchy 310 shown in Figure 2.

At step S602, a node type is determined for one or more of the nodes in the information hierarchy. The node type may be selected from a plurality of pre-determined nodes.

At step S604, values associated with one or more of the nodes may be determined, in accordance with the node type associated with that node. For example, referring to the Factory1 node in Figure 2, where the node is a category node which, according to the node type, is associated with a geographic location then the geographic location of the node is determined. Accordingly, the values 320 of the parameters specified for the node by the node type definition are determined.

The process continues with step S606, in which a mapping rule is determined for at least one node associated with a respective data stream. Examples of mapping rules 512 are shown in Figure 4 and are described above.

Steps S600, S602 and S605 may be repeated for multiple nodes. The steps may be performed in a different order than is shown in Figure 5.

In some examples, one or more of steps S600, S602 and S605 comprises determining information based on user interaction with a user interface of the management system 280. In such examples, the user may specify, via the user interface, one or more of the nodes of the hierarchy, their respective types, and parameter values for each node, in accordance with the respective parameter types. The user interface may also be used to specify the mapping rule for one or more nodes.

In some examples, one or more of steps S600, S602 and S605 may comprise an automatic hierarchy determination procedure, as specified in application Serial No. 19/056,372, entitled MANAGEMENT SYSTEM AND CLIENT FOR A MESSAGING SYSTEM, the entire contents of which are hereby incorporated by reference.

In some examples, an automatic hierarchy determination procedure may be followed by modifications to the information hierarchy by the user. These modifications may comprise one or more of steps S600, S602 and S605 and may comprise one or more of an addition, removal or moving of a node within the information hierarchy 310, the assignment of a parameter type to a node, or the setting or modification of a parameter value for a node.

At step S610, one or more agents is configured and associated with a respective portion of the information hierarchy 310. Step S610 may comprise user interaction, automatic determination, or a combination of both. Step S610 may comprise the determination of the underlying publish/subscribe messaging system (e.g., the relative location of publisher clients, data brokers and, in some examples, subscriber clients) the relative location of the entities which generate data corresponding to the data streams and the relative location of the agents within the publish/subscribe messaging system.

At step S615, a security key is configured at the management system for an agent 270. The security key is a secret key which can be used to authorize a connection between an agent and the management system. The security key may be a sequence of bits or characters which have been generated by a pseudo-random number generator at the management agent.

At step S620, an agent 270 is configured with details of the management system and with the security key determined at step S615. In some examples, a connection between the agent and management system is by means of a connection (e.g., using TCP/IP) over an IP network, and the details comprise an IP address and port number of the management system for allowing the agent to initiate a connection request to the management system.

In some examples, the connection between the agent and management system is by means of the publish/subscribe messaging system, and the details comprise one or more topics to be used for messages generated at the agent which are destined for the management system, and one or more topics to be used for messages generated at the management system which are destined for the agent and to which the agent should subscribe.

The agent then initiates a sequence of one or more messages 650 for establishing a connection with the management system. In a message from the agent, the security key determined at step S615 and provisioned to the agent at step S620 is used to authenticate the agent with the management system. As part of the connection establishment step, the management system verifies the identity of the agent, based on the security key.

The process continues with step S625 in which an agent-specific representation of the information hierarchy 310 are generated. These may exclude, for a given agent, nodes corresponding to any data stream to which the agent does not have access. Where an agent is associated with a node in the manner described above in the context of Figure 3, the agent-specific representation may include only those nodes which are children (either directly or indirectly) of its associated node.

In some examples, instead of generating agent-specific representations, a common representation (e.g., representing the entire information hierarchy 310) is generated.

The representations may include, for each data stream node, the corresponding mapping information 510.

The representations may include, for one or more nodes, the respective node type and parameter values for the node, in accordance with the node type definition.

After step S625, the representation generated at step S625 are transmitted to the respective agents. In the example of Figure 5, a first representation specific to the first agent 270a ('information hierarchy extract A' 655) is transmitted to the first agent 270a.

In the example of Figure 5, based on the received representation of the information hierarchy extract 655, at step S630, the agent 270 monitors and interprets data that it can access within the publish/subscribe messaging system. In the example of Figure 5, the first agent 270a is associated with the edge publisher client 250a of Figure 1 and is accordingly able to monitor messages which are published by and/or are generated for publication by, the edge publisher client 250a (as described above in the context of Figure 3). These messages may comprise representations of data obtained from the Production Line 2 sensors in Factory 2.

As a specific example, based on the mapping information 510b shown in Figure 4 and described above which is received as part of the information hierarchy extract A 655, the first agent 270a can determine, for a given message at the edge publisher client 250a, whether it contains a temperature value (i.e., corresponds to the node 330e of Figure 4) based on the topic identifier 512b.

If it does, the agent 270a can determine, based on the payload decoding rule 518b, the value of the temperate data based on the payload of the message.

In some examples, the agent performs basic data processing of the data which it is able to extract from the messages based on the received information hierarchy 655. This basic data processing may comprise one or more of maintaining a history of the data values for each node and transmitting to the management system data values for a node.

In some examples the agent may provide information regarding the processed data to the management system on request of the management system.

In the example of Figure 5, a request for real-time temperature data 660 is transmitted from the management system to the agent 270a. The request from the management system may be triggered by the user interface. For example, in response a user selecting a particular node (in the example of Figure 5, this may be the node 330e of the information hierarchy 310), the management system may request a real-time forwarding of data associated with that node from the agent. Where, as in the case of Figure 5, multiple agents have visibility of that data, the management system may select a single agent (e.g., one which is logically closest to the source of the data in the hierarchy) to request the data from.

After the request 660 is received, the edge publisher client 250a receives raw sensor data 665 from the sensor 240b, indicating a temperature value of 25.3 degrees Celsius. In response to receiving this, at step S635 the edge publisher client 250a prepares a message for publication, which the agent 270a detects as comprising temperature data. The agent extracts the raw temperature data from the message. The raw data 670 is then transmitted from the agent 270a to the management system 280. The transmission of the raw data 670 may bypass the data broker 260. The raw data may then be displayed on the user interface.

The forwarding of the data 670 may be in a 'raw' or compressed format, which is different from, and more efficient to transmit than, the original payload message from which the data was extracted by the agent.

Accordingly, a user is able to access and monitor in real-time data being transmitted through the publish/subscribe messaging system without having to decode message payloads, and without having to determine the relevant topic(s) to monitor. Latency of this monitoring may be improved compared to a conventional publish/subscribe messaging system in which all data must traverse a data broker before being received at a user system. In the example of Figure 5, the message prepared at the edge publisher client 250a would be published to the data broker 260, which would then forward the message to a client having the necessary subscription (not shown in Figure 5 for conciseness). While the management system 280 may include such a subscriber client, the examples described herein avoid the need for users to have to configure appropriate subscriptions (which requires knowledge of the relevant topic(s)) and can reduce the latency with which data can be obtained at the management system by bypassing the data broker 260.

Step S615, step S620, step S625, step S630 and message exchange 650 may be repeated for one or more additional agents, with corresponding information hierarchy 655 being generated for each agent. The performance of these steps in respect of the second agent 270b is not shown in Figure 5.

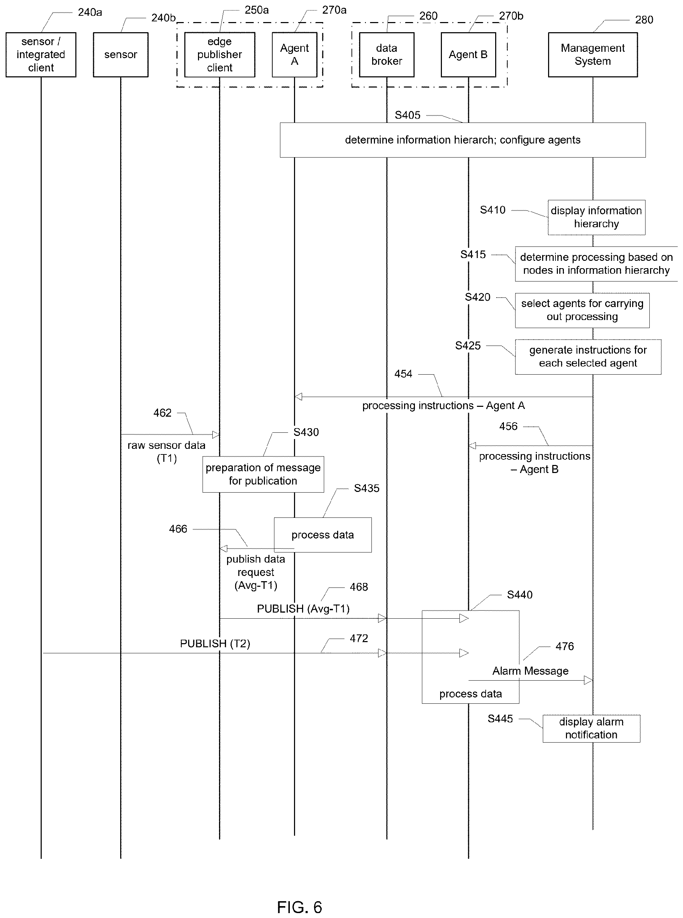

Figure 6 shows a combined process and message sequence diagram of an example deployment of a process, in accordance with examples of the present disclosure.

The example shown in Figure 6 illustrates the deployment of Process 1 350a of Figure 3.

The process in Figure 6 starts with step S405, in which the information hierarchy 310 is determined and agents 270 are configured. These steps may correspond to one or more of the steps S600/S602/S605/S610/S615/S620/S625/S630 and corresponding messages of Figure 5, as described above.

At step S410, the information hierarchy is displayed via a user interface provided by the management system 280. As described above, the user interface may be provided remotely, such as by means of a web server/web client arrangement, where the management system 280 comprises a web server.

The display of the information hierarchy 310 may include nodes and may allow the user to selectively display parameter values associated with a node. The display of the information hierarchy 310 may omit mapping information 510. In some examples, agents may be shown within the information hierarchy 310. In some examples, a user may selectively control the display of agents within the information hierarchy 310. As described above, in the context of Figure 5, the user interface may comprise a real-time display of data associated with a particular node, the data being obtained by the management system from an agent.

At step S415, processing to be performed is determined. In some examples, the user interface permits a user to define processing by reference to one or more nodes in the information hierarchy 310. The user interface may permit a user to define the desired processing without reference to (or even awareness of) the underlying details of how the publish/subscribe system is used to transmit data. For example, desired processing can be defined without reference to publish/subscribe topics or message payload contents.

In some examples, the desired processing may be defined by a user in the form of a script, where variables in the script refer to nodes in the information hierarchy 310, or their corresponding data. The script may be transmitted to the management system 280.

Accordingly, the use of information hierarchy 310 can provide a simpler and more intuitive mechanism for defining desired data processing within an organization.

At step S420, the management system 280 determines one or more agents 270 to implement the desired processing. The processing may result in new messages being generated or some messages being deleted within the publish/subscribe message system; therefore, the point within the publish/subscribe message system at which the processing is carried out can significantly affect the volume of message traffic within the system.

The management system 280 may apply any suitable algorithm to select the agent(s) to implement the desired processing.

An example of a suitable algorithm is to perform processing at the 'lowest common denominator' agent. According to such an algorithm, when considering two candidate agents which are both able to perform the processing because both have access to the necessary input data, the candidate agent which is lowest in the hierarchy is used.

By way of example, for the second process 350b illustrated in Figure 3, both the first agent 340a and second agent 340b are candidate agents. Because the first agent 340a is located within the hierarchy at a lower level than the second agent 340b, the management system 280 selects the first agent 270a for performing the processing.

In some examples, the processing may be divided and implemented at two or more agents.

In the example of Figure 6, the processing determined at step S415 corresponds to the first process 'Process 1' 350a described above. At step S420 it is determined to implement the desired processing jointly at both the first agent 270a and the second agent 270b.

In some examples, such as in the example of Figure 6, the publish/subscribe messaging system is used to convey a result or output from processing by a first agent using messages which can be accessed by other agents within the publish/subscribe messaging system. These messages may also be the subject of a separate subscription.

Specifically, first processing instructions ('processing instructions for Agent A') 454 are generated at step S425 and are transmitted to the first agent 270a. According to these first processing instructions 454, the first agent ('Agent A') 270a is configured:
i) to generate a 10 second average temperature reading based on data from the sensor 240b (i.e., to calculate an average value of the 'Temperature' data stream under the 'Production Line 2' node in the information hierarchy 310, measured over a 10 second window); and
ii) to publish the determined average temperature value using a specific topic, using a specified payload format.

Second processing instructions ('processing instructions for Agent B') 456 are also generated at step S425 and are transmitted to the second agent 270b. According to these second processing instructions 456, the second agent ('Agent B') 270b is:
i) to access the average temperature value for the sensor 240b, generated by the first agent 270a; the instructions comprise the specified topic and payload format indicated to the first agent 270a in the first processing instructions 454;
ii) to generate a 30 second average temperature reading of temperature data published by the sensor/integrated client 240a (i.e., to calculate an average value of the 'Temperature' data stream under the 'Production Line 1' node in the information hierarchy 310); and
iii) transmit to the management server 280 a message indicating an alarm state, if either the 10 second average temperature reading from the sensor 240b (calculated by the first agent 270a) exceeds a threshold, or the 30 second average temperature reading from the sensor/integrated client 240a (calculated by the second agent 270b) exceeds the threshold.

As in the example of Figure 5, in response to receiving raw sensor data 462 indicating the temperature measurement on the Production Line 1, the edge publisher client 250a prepares a message for publication at step S430, indicating the temperature measurement. This prepared message is accessed at the first agent 270a. The first agent 270a detects, based on its knowledge of the information hierarchy 310 and specifically of the mapping information 510b, that the message comprises temperature data associated with the node 330e; accordingly, the first agent 270a extracts the temperature data from the prepared message.

As in Figure 5, the publication of the message prepared at step S430 is omitted for conciseness.

In response to extracting the temperature data then, at step S435, the first agent 270a performs the processing in accordance with the first processing instructions 454 and calculates the 10 second average temperature reading from the sensor 240b. This may comprise storing raw temperature data, associating the data with a respective timestamp and storing the timestamp, retrieving previously stored data and respective timestamps, and determining an average value of data values which have been received within a previous 10 second window. The first agent 270a sends a publish data request 466 to the edge publisher client 250a, indicating the calculated average value. The request 466 may indicate a topic and payload for the message to be published. The topic and payload format may be defined by the first processing instructions 454.

In response to receiving the publish data request 466, the edge publisher client 250a generates and publishes a message 468 indicating the average temperature value calculated at step S435. The publishing of the message 468 may be in accordance with the publish/subscribe messaging protocol, using a connection between the edge publisher client and the data broker 260 which is operated in accordance with the publish/subscribe messaging protocol.

In response to receiving the second processing instructions 456, the second agent 270b initiates processing in accordance with those instructions. In the example of Figure 6, the instructions include accessing specific published messages. Because the second agent 270b is associated with the data broker 260 (and thus has access to all messages within the data broker 260) there is no need for the second agent 270b to issue a subscription request. However, in some examples, in response to receiving an instruction to access certain messages, an agent may transmit a subscription request to the data broker, to request the forwarding of those messages from the data broker. The subscription request may be in accordance with the publish/subscribe messaging protocol used by the publish/subscribe messaging system.

At step S440, the second agent 270a performs the processing in accordance with the second processing instructions 456. Specifically, when the published message 468, which indicates the average temperature value from the sensor 240b, is received at the data broker 260 the second agent extracts the average temperature value from the published message, based on the second processing instructions 456.

Also at step S440, when the sensor/integrated client 270a publishes a temperature data message 472, the second agent 270b extracts the temperature value, based on the first mapping information 510a associated with the corresponding node 330c of the information hierarchy 310, in accordance with the second processing instructions 456. The second agent determines a 30-second average temperature for the Production Line 1. It also evaluates alarm conditions based on the determined 30-second average, and on the 10-second average temperature for the Production Line 2 as calculated by the first agent 270a.

In the example of Figure 6, the second agent determines that one or more conditions associated with an alarm state are satisfied and, in response, generates and transmits to the management system 280 an alarm message 476. The transmission of the alarm message 470 may bypass the data broker 260.

At step S445, in response to receiving the alarm message 476, the management system 280 indicates the alarm status via the user interface.

It will be appreciated that the messages and processing sequences shown in Figure 5 and Figure 6 are by way of example, and that the scope of the present disclosure is not limited to the specific sequence of processing steps, messages and arrangement of devices shown in Figure 5 and Figure 6. In some examples, one or more of the steps shown may be omitted, and in some examples, steps may be performed in a different order (including where some steps are performed substantially in parallel). For example, the transmission of the information hierarchy extract 655 in Figure 5 may be combined with the transmission of the processing instructions 454 in Figure 6. Step S630 may accordingly occur after receipt of the processing instructions 454 and before step S430.

In some examples, the agent begins monitoring data only in response to a request from the management server 280. For example, referring to Figure 5, step S630 may occur later, in response to the receipt of the request 660, or in response to the receipt of the processing instructions 454 of Figure 6.

In some examples, agents are configured with information regarding the information hierarchy to the extent necessary for them to perform the desired processing. For example, information related to nodes corresponding to data which an agent can access may not be transmitted to the agent if no processing of that data is required.

In some examples, the result of processing at an agent can be the suppression of messages that would otherwise be published in the publish/subscribe messaging system. The management system 280 may accordingly specify, as part of the processing instructions issued to an agent, that certain messages are to be suppressed, i.e., not transmitted from a publisher client, or not forwarded by a data broker (irrespective of any subscriptions at the broker for those messages). An agent may indicate to its associated publisher or data broker that such messages are to be suppressed.

In an example scenario similar to that of Figure 6, there is no subscriber for temperature measurements from either the sensor 240b or from the sensor/integrated client 240a, and no process defined based on the information hierarchy 310 which relies on that data, other than the first process 350a.

Accordingly, the management system 280 instructs, via the first processing instructions 454 and the second processing instructions 456, the first agent 270a and the second agent 270b, respectively, to suppress the publication or forwarding of messages indicating the temperature of the production lines. In response, the first agent 270a and second agent 270b issue corresponding requests to the associated publisher/data broker (not shown in Figure 6) and the messages are suppressed.

The information hierarchy 310 provides a human-readable, abstracted representation of the various data being communicated within the publish/subscribe messaging system, which may be decoupled from the form and content of messages actually published within the system. Accordingly, it is not necessary for published messages in the publish/subscribe messaging system to use human-readable topics or payloads.

Processing at agents, in accordance with instructions generated by the management system, can effectively compress or otherwise reduce the volume of message data within the system. For example, a message having the first payload format 510a shown in Figure 4 includes characters for the purpose of allowing a user to readily comprehend its contents. Processing at an agent could reduce the size of message by, for example, removing the field names and/or encoding the indicated values in a more efficient (compressed) format.

In addition or alternatively, the number of messages can be reduced by combining data that would otherwise be (or has been) published in multiple messages into a single message. For example, where multiple integrated clients each publish measurement data every minute, the management system may instruct an agent having access to the published data to combine the data from multiple clients into a single message, publish the single message, and suppress onward publication of the original messages.

Where the data is required to be used elsewhere (e.g. for processing at another agent), the management system can issue instructions to both the agent performing the compression/reduction and the other agent specifying the topic and payload format of messages to be used to form the new messages, and from which the relevant data can be extracted.

By suppressing, compressing or combining messages carrying underlying data, the size and/or number of transmissions within the publish/subscribe messaging system can be reduced.

Accordingly, processing bottlenecks (such as at a data broker) can be avoided by reducing the quantity of messages that they are required to process and the overall capacity of the system (for example, measured in terms of total volume of sensor data generated, or total number of sensors) can be increased.

The data can nevertheless be used in processes within the organization by processing the data (e.g., aggregating it, or performing conditional tasks based on the data) at agents within the publish/subscribe messaging system.

In the example of Figure 6, agents are instructed to perform processing based on an information hierarchy extract and processing instructions, which are sent separately to each agent. However, the present disclosure is not limited to any specific form for indicating to the agents the necessary processing to be carried out. In some examples, the information hierarchy extract and processing instructions are combined. In some examples, the processing instructions include information derived from, or corresponding to, the information hierarchy 310 (e.g., the mapping information 510 for one or more modes) which is sufficient for the agent to be able to carry out the requested processing.

In some examples, the information hierarchy extract comprises information on more, or fewer nodes, than the set of nodes to which the agent has access.

In the example of Figure 6, the management system 280 generates a user interface for allowing a user to specify desired processing and for displaying the information hierarchy. In some examples, the user interface provides a different set of information or there may be no user interface at all. In some examples, a user or remote system interacts with the management system via an application programming interface, which is used to communicate one or both of the information hierarchy and the desired processing.

In the examples described above, agents operate on messages in a publish/subscribe messaging system. In some examples, at least one agent is deployed at a data broker. In some examples, an agent is deployed as a stand-alone agent; that is, an agent having access to some or all messages in the messaging system, but not associated with a particular client or with a data broker. In the examples above, an agent is deployed at the data broker; in some examples, no agent is deployed at the data broker. In general, the manner in which agents are deployed, with respect to the publish/subscribe messaging system, is not limited by the present disclosure.

In some examples, the agents access messages from any suitable message stream and perform processing based on the accessed messages. In some examples, the messaging system may not be a publish/subscribe messaging system, and/or there may be no data broker.

In the examples of Figure 5 and Figure 6, the second agent 270a at the edge publisher client 250a monitors prepared messages for publication. In some examples, agents which are integrated with sensors access the raw data directly from the sensors; in such a case the mapping information 510 does not refer to parameters of messages but may refer instead to a specific sensor or data stream. Where an agent is associated with a data source which generates only a single data stream, mapping information 510 may be omitted for that agent.

In examples described above, processing is described as being carried out by agents which are integrated with, or co-located with other entities of the publish/subscribe messaging system (an 'integrated' agent). In some examples, the processing is carried out in a distributed manner; for example the desired processing may be carried out jointly by two or more agents. In some examples, a portion of the processing is carried out by the management system 380. For example, where a process requires the extraction of data from messages and the processing of that extracted data, the extraction of data may occur at an integrated agent, and the processing of the extracted data takes place at a different agent (which may or may not be an integrated agent).

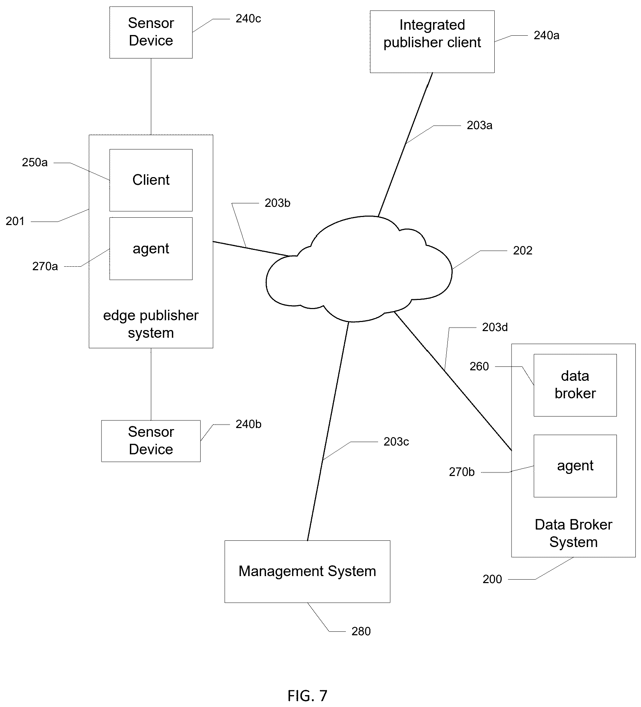

Figure 7 is a simplified network diagram showing some of the elements shown in Figure 1, arranged in accordance with examples of the present disclosure. For clarity and conciseness, not all of the elements of Figure 1 are shown in Figure 7.

In the example arrangement shown in Figure 7, first agent 270a is implemented together with first edge publisher client 250a on edge publisher system 201. Accordingly, edge publisher system 201 performs the functions of the first edge publisher client 250a and first agent 270a described herein. The edge publisher system is connected to the second sensor device 240b and the third sensor device 240c.

Similarly, the second agent 270b is implemented together with data broker 260 on data broker system 200. Accordingly, data broker system 200 performs the functions of the data broker 260 and second agent 270b as described herein.

It will be appreciated that the arrangement shown in Figure 7 are not limiting, and in some examples, one or both the first agent 270a and the second agent 270b are implemented as separate systems. In some examples, the data broker system 200 and/or the edge publisher system 201 are implemented as distributed systems. In some examples, the data broker system 200 and/or the edge publisher system 201 are implemented in a cloud computing environment.

In the example of Figure 7, the edge publisher system 201, data broker system 200, integrated publisher client 240a and management system 280 are connected, via respective communication links 203, to a communications network 202. The communications links and communications network 202 may comprise one or more connections operated in accordance with any suitable communications protocols. The communications network 202 may comprise two or more networks; for example, it may comprise one or more of a corporate intranet, a wide area network (such as the internet), a cellular network.

In some examples, one or more of the elements shown in Figure 7 may be connected by point-to-point links. For example, where the second agent 270b and data broker 260 are implemented on discrete systems, the respective systems may be connected via a point to point connection, and not via the communications network 202.

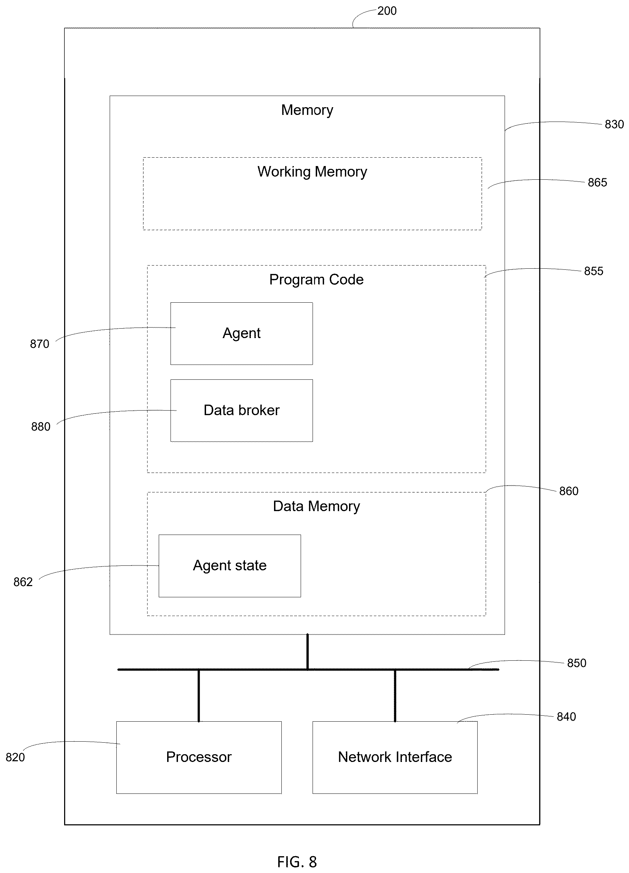

Figure 8 is a simplified block diagram of the data broker system 200 of Figure 7 in accordance with examples. As shown, the data broker system 200 includes a processor 820, memory 830, and a network interface 840 which are coupled by a bus interface 850. The network interface 840 is for bidirectional communication. The memory 830 comprises a storage medium on which is stored program code 855, a data memory 860 and a working memory 865.

The program code 855 may comprise agent computer program code 870, and data broker computer program code 880 which, when executed by the processor 820, cause the data broker system 200 to implement, respectively, the second agent 270b, and the data broker 260 described above. In general, the program code 855 when executed by the processor 820, causes the data broker system 200 to implement one or more of the processes of the data broker 260 and second agent 270b described above.

The data memory 860 comprises an agent state region 862 within which is stored state information associated with the agent for allowing the second agent 270b to implement any suitable state machine(s) for performing processing described above.

The working memory 865 may be used for the temporary storage of other variables and state, such as buffers of messages, and state associated with messaging connections.

In some examples, the data broker system 200 may comprise more than one processor. In some examples, the data broker system 200 may comprise more than one network interface.

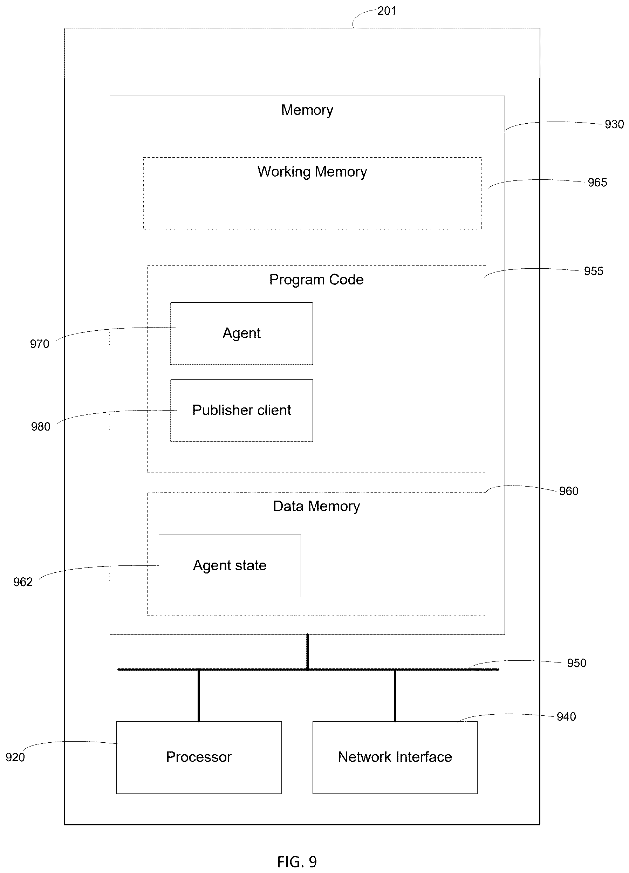

Figure 9 is a simplified block diagram of the edge publisher system 201 of Figure 7 in accordance with examples. As shown, the edge publisher system 201 includes a processor 920, memory 930, and a network interface 940 which are coupled by a bus interface 950. The network interface 940 is for bidirectional communication. The memory 930 comprises a storage medium on which is stored program code 955, a data memory 960 and a working memory 965.

The program code 955 may comprise agent computer program code 970, and data broker computer program code 980 which, when executed by the processor 920, cause the edge publisher system 201 to implement, respectively, the first agent 270a, and the first edge publisher client 250a described above. In general, the program code 955 when executed by the processor 920, causes the edge publisher system 201 to implement one or more of the processes of the first agent 270a, and the first edge publisher client 250a described above.

The data memory 960 comprises an agent state region 962 within which is stored state information associated with the agent for allowing the first agent 270a to implement any suitable state machine(s) for performing processing described above.

The working memory 965 may be used for the temporary storage of other variables and state, such as buffers of messages, and state associated with messaging connections.

In some examples, the edge publisher system 201 may comprise more than one processor. In some examples, the edge publisher system 201 may comprise more than one network interface. In some examples, the edge publisher system 201 may comprise interfaces for connecting to one or more sensor devices, such as second sensor device 240b and third sensor device 240c as in the example of Figure 7.

In some examples, an agent 270 is a standalone agent. A standalone agent system may generally comprise the elements of the edge publisher system 201 as shown in Figure 9 and described above, wherein the program code 955 does not include the publisher client code 980. Accordingly, the program code 955 when executed by the processor 920, causes the standalone agent system 201 to implement one or more of the processes of the first agent 270a or of the second agent 270b described above.

The standalone agent system, edge publisher system 201 and data broker system 200 are, accordingly, examples of systems which can implement the agent processes described herein.

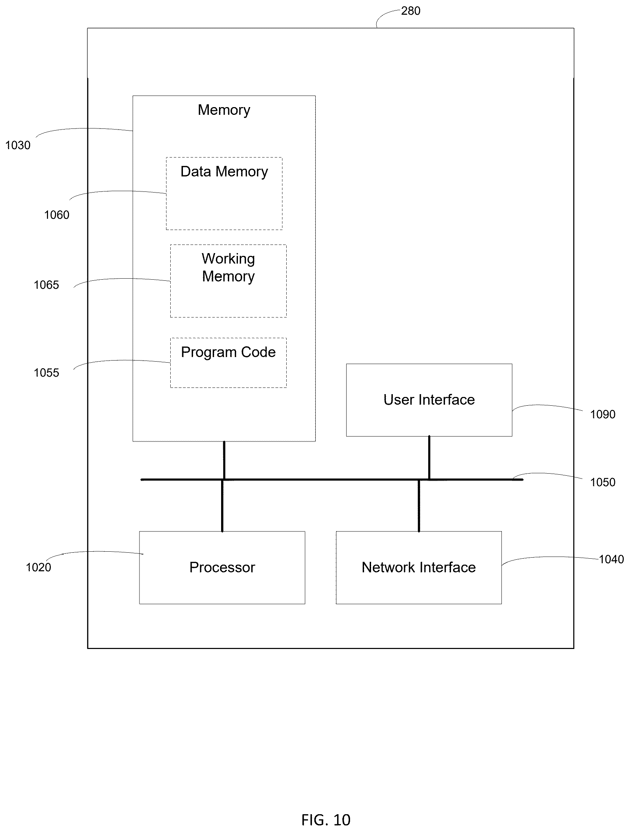

Figure 10 is a simplified block diagram of the management system 280 described above, in accordance with examples. As shown, the management system 280 includes a processor 1020, memory 1030, network interface 1040, and user interface 1090 which are coupled by a bus interface 850. The network interface 1040 is for bidirectional communication. The memory 1030 comprises a storage medium on which is stored program code 1055, a data memory 1060 and a working memory 1065.

The program code 1055 when executed by the processor 1020, causes the management system 280 to implement the processes of the management system 280 as described above. The working memory 1065 may be used for the temporary storage of variables and state.

In some examples, the management system 280 may comprise more than one processor. In some examples, the management system 280 may comprise more than one network interface. As described above, in some examples the user interface 1090 is provided by means of a web server and (not shown) separate web client device, such as a system operating a web browser application. In some such examples, the program code 1055 may comprise code which when executed causes the management system 280 to provide a web server for connecting to a web client on which the user interface is deployed.

In some examples, one or more of the data broker system 200, edge publisher system 201 and management system 280 may be implemented using a plurality of respective devices, in a distributed architecture. In this case, the portions of memory 830, 930, 1030 shown in Figure 8, Figure 9 and Figure 10 may be distributed, so that some device instances do not include all of the memory regions shown in the respective figure.

The processors 820, 920, 1020 may be of any type suitable and may include one or more general purpose computers and application-specific integrated circuits as non-limiting examples. The storage media on which program code 855, 955, 1055 is stored may be non-transitory storage media.

The above examples are to be understood as illustrative examples. Further examples are envisaged. For example, systems as discussed herein may be deployed in other configurations and scenarios in which generated messages may be generated and transmitted by clients in a manner which is unexpected or undesirable. It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the disclosure, which is defined in the accompanying claims.

Examples of the present disclosure may be in accordance with the following numbered paragraphs:
Paragraph 1. A method comprising:
   determining, at a management system of a publish/subscribe messaging system, processing to be carried out in respect of messages within the publish/subscribe messaging system,
   selecting one or more agents within the publish/subscribe messaging system to perform the processing, and
   transmitting to the one or more agents respective instructions which cause the one or more agents to perform the processing in respect of the messages.
Paragraph 2. A method according to paragraph 1, wherein the publish/subscribe messaging system comprises a data broker which receives and publishes messages in accordance with a publish/subscribe messaging protocol, and one of the selected one or more agents is associated with the data broker.
Paragraph 3. A method according to paragraph 1 or paragraph 2, wherein one of the selected one or more agents is associated with a publisher client which which publishes messages in accordance with the publish/subscribe messaging protocol.
Paragraph 4. A method according to any of paragraphs 1 to 3, wherein the publish/subscribe messaging system comprises a data broker which receives and publishes messages in accordance with a publish/subscribe messaging protocol and a publisher client which publishes messages in accordance with the publish/subscribe messaging protocol, and one of the selected one or more agents is a standalone agent not associated with a publisher client or a data broker, the standalone agent having access to messages published in the publish/subscribe messaging system.
Paragraph 5. A method according to any of paragraphs 1 to 4, wherein the processing comprises one or more of:
   extracting data from one or more of the messages;
   performing operations based on data extracted from one or more of the messages;
   generating one or more of the messages for publication within the publish/subscribe messaging system;
   suppressing further transmission of one or more of the messages; and
   transmitting an indication to the management system, based on data extracted from one or more of the messages.
Paragraph 6. A method according to any of paragraphs 1 to 5, wherein the processing in respect of the messages comprises extracting data associated with a first data stream from one or more of the messages, the method further comprising:
   transmitting, to one of the one or more agents, mapping information indicating how data associated with the first data stream is encoded within messages in the publish/subscribe messaging system.
Paragraph 7. A method according to any of paragraphs 1 to 6, wherein the processing comprises generating, by an agent, one or more of the messages for publication, and the instructions transmitted to the agent comprise an indication of one or more of a topic and a message format for the generated messages.
Paragraph 8. A method according to any of paragraphs 1 to 7, wherein the processing comprises:
   generating, by a first agent of the one or more agents, a message for publication and extracting, by a second agent of the one or more agents, data from the message generated by the first agent.
Paragraph 9. A method according to any of paragraphs 1 to 8, wherein the selecting the one or more agents is based on the ability of the one or more agents to access the messages.
Paragraph 10. A method according to any of paragraphs 1 to 9, wherein the processing comprises extracting data from one or more of the messages, and
   the selecting the one or more agents is based on the relative locations within the publish/subscribe messaging system of the one or more agents and a publisher of the one or more messages.
Paragraph 11. A method according to any of paragraphs 1 to 10, wherein the processing comprises extracting data from one or more of the messages comprising data associated with a data stream, and
   the selecting the one or more agents is based on the relative location within the publish/subscribe messaging system of the one or more agents and a data source which generates the data stream.
Paragraph 12. A method according to any of paragraphs 1 to 11, wherein the respective instructions are transmitted via the publish/subscribe messaging system.
Paragraph 13. A method according to any of paragraphs 1 to 12, the method comprising:
   determining a plurality of nodes in an information hierarchy, the nodes corresponding to respective data streams, the location of a node in the information hierarchy corresponding to a data stream in the information hierarchy being in accordance with a relative location of a data source, associated with the data stream, within a topology representing an arrangement of data sources,
   associating, with each node, a node type selected from a set of pre-defined node types, each of the set of pre-defined node types defining one or more parameters, and
   determining, for each node, a value of each of the parameters defined for nodes of the node type associated with the respective node.
Paragraph 14. A method according to paragraph 13, the method comprising generating at the management system, for an agent, an indication of a portion of the hierarchy associated with the agent and
   transmitting the indication of the portion of the hierarchy associated with the agent to the agent.
Paragraph 15. A method according to paragraph 13 or paragraph 14, wherein a node in the information hierarchy associated with a data stream is associated with mapping information indicating how data associated with the data stream is encoded within messages in the publish/subscribe messaging system.
Paragraph 16. A method according to any of paragraphs 13 to 15, wherein the information hierarchy comprises nodes corresponding to the one or more agents.
Paragraph 17. A method according to any of paragraphs 13 to 16, the method comprising displaying a representation of the information hierarchy on a user interface.
Paragraph 18. A method according to any of paragraphs 13 to 17, wherein the determining the processing to be carried out in respect of messages within the publish/subscribe messaging system is based on the information hierarchy.
Paragraph 19. A method comprising:
   determining at a management system of a publish/subscribe messaging system a plurality of nodes in an information hierarchy, the nodes corresponding to respective data streams whose respective data is transmitted via the publish/subscribe messaging system, the location of a node corresponding to a data stream in the information hierarchy being in accordance with a relative location of a data source, associated with the data stream, within a topology representing an arrangement of data sources, and
   associating, with each node, a node type selected from a set of pre-defined node types, each of the set of pre-defined node types defining one or more parameters.
Paragraph 20. A method according to paragraph 19, the method comprising:
   determining, for each node, a value of each of the parameters defined for nodes of the node type associated with the respective node.
Paragraph 21. A method according to paragraph 19 or paragraph 20, the method comprising generating at the management system, for each of one or more agents, an indication of a portion of the hierarchy associated with the respective agent, and
   transmitting the indication of the portion of the hierarchy associated with the agent to the agent.
Paragraph 22. A method according to any of paragraphs 19 to 21, wherein the information hierarchy comprises nodes corresponding to the one or more agents in the publish/subscribe messaging system, the agents having access to messages transmitted in the publish/subscribe messaging system and being configurable by the management system to perform processing in respect of a respective portion of the messages.
Paragraph 23. A method according to any of paragraphs 19 to 22, the method comprising displaying a representation of the information hierarchy on a user interface.
Paragraph 24. A method comprising:
   receiving, at an agent of a publish/subscribe messaging system, instructions for processing to be carried out in respect of messages within the publish/subscribe messaging system, and
   performing the processing in respect of the messages, wherein
   the publish/subscribe system comprises a data broker which receives and publishes messages in accordance with a publish/subscribe messaging protocol, a publisher client which publishes messages in accordance with the publish/subscribe messaging protocol, and the agent.
Paragraph 25. A method according to paragraph 24, wherein the agent is one of a plurality of agents within the publish/subscribe messaging system.
Paragraph 26. A method according to paragraph 24 or paragraph 25, wherein the agent is a standalone agent within the publish/subscribe messaging system and not associated with a data broker or a publisher client.
Paragraph 27. A method according to any or paragraphs 24 to 26, wherein the agent has access to a subset of published messages transmitted within the publish/subscribe messaging system.
Paragraph 28. A method according to any of paragraphs 24 to 27, wherein the processing comprises one or more of:
   extracting data from one or more of the messages;
   performing operations based on data extracted from one or more of the messages;
   generating one or more of the messages for publication within the publish/subscribe messaging system;
   suppressing further transmission of one or more of the messages; and
   transmitting an indication to the management system, based on data extracted from one or more of the messages.
Paragraph 29. A method according to any of paragraphs 24 to 28, wherein the processing in respect of the messages comprises extracting data associated with a first data stream from one or more of the messages, the method further comprising:
   receiving at the agent mapping information indicating how data associated with the first data stream is encoded within messages in the publish/subscribe messaging system.
Paragraph 30. A method according to any of paragraphs 24 to 29, wherein the processing comprises generating, by the agent, one or more of the messages for publication, and
   the instructions received by the agent comprise an indication of one or more of a topic and a message format for the generated messages.
Paragraph 31. A method according to any of paragraphs 24 to 30, wherein the processing comprises:
   extracting, by the agent, data from the message generated by another agent.
Paragraph 32. A method according to any of paragraphs 24 to 31, wherein the instructions are received via the publish/subscribe messaging system.
Paragraph 33. A method according to any of paragraphs 24 to 32, the method comprising:
   receiving an indication of a portion of an information hierarchy, the information hierarchy comprising a plurality of nodes corresponding to respective data streams, the location of a node in the information hierarchy corresponding to a data stream in the information hierarchy being in accordance with a relative location of a data source, associated with the data stream, within a topology representing an arrangement of data sources.
Paragraph 34. A method according to paragraph 33, wherein a node in the information hierarchy is associated with a node type selected from a set of pre-defined node types, each of the set of pre-defined node types defining one or more parameters.
Paragraph 35. A method according to paragraph 33 or paragraph 34, wherein a node in the information hierarchy associated with a data stream is associated with mapping information indicating how data associated with the data stream is encoded within messages in the publish/subscribe messaging system.
Paragraph 36. A method according to any of paragraphs 33 to 35, wherein the information hierarchy comprises a node corresponding to the agent.
Paragraph 37. A method comprising:
   determining at an agent in a publish/subscribe messaging system mapping information defining the encoding of data, encoded within a payload of a message,
   determining, based on the mapping information, whether a payload of a message contains the data, wherein
   the publish/subscribe system comprises a data broker which receives and publishes messages in accordance with a publish/subscribe messaging protocol, a publisher client which publishes messages in accordance with the publish/subscribe messaging protocol, and the agent.
Paragraph 38. A method according to paragraph 1, wherein the data is associated with a first node in an information hierarchy, the method comprising:
   receiving an indication of a portion of the information hierarchy, the information hierarchy comprising a plurality of nodes, including the first node, corresponding to respective data streams, wherein
   the location of node in the information hierarchy which corresponds to a data stream in the information hierarchy is in accordance with a relative location of a data source, associated with the data stream, within a topology representing an arrangement of data sources.
Paragraph 39. A method according to paragraph 37 or paragraph 38, the method comprising:
   extracting the data from the message and processing the data, in accordance with instructions received from a management system of the publish/subscribe messaging system.
Paragraph 40. A management system comprising:
   a network interface,
   one or more memories, and
   one or more processors,
   the one or more memories having stored thereon instructions, which when executed by the one or more processors, cause the management system to perform the method of any one of paragraphs 1 to 23.
Paragraph 41. A computer readable medium having stored thereon instructions which, when executed by a processor, cause a management system to perform the method of any one of paragraphs 1 to 23.
Paragraph 42. A system comprising:
   a network interface,
   one or more memories, and
   one or more processors,
   the one or more memories having stored thereon instructions, which when executed by the one or more processors, cause the system to perform the method of any one of paragraphs 24 to 39.
Paragraph 43. A computer readable medium having stored thereon instructions which, when executed by a processor, cause a system to perform the method of any one of paragraphs 24 to 39.

## Claims

1. A method comprising:
determining, at a management system of a publish/subscribe messaging system, processing to be carried out in respect of messages within the publish/subscribe messaging system,
selecting one or more agents within the publish/subscribe messaging system to perform the processing, and
transmitting to the one or more agents respective instructions which cause the one or more agents to perform the processing in respect of the messages.

2. A method according to claim 1, wherein the publish/subscribe messaging system comprises a data broker which receives and publishes messages in accordance with a publish/subscribe messaging protocol and a publisher client which publishes messages in accordance with the publish/subscribe messaging protocol, and one of the selected one or more agents is
a standalone agent not associated with a publisher client or a data broker, the standalone agent having access to messages published in the publish/subscribe messaging system,
an agent associated with the data broker, or
an agent associated with the publisher client.

3. A method according to claim 1 or claim 2, wherein the processing comprises one or more of:
extracting data from one or more of the messages;
performing operations based on data extracted from one or more of the messages;
generating one or more of the messages for publication within the publish/subscribe messaging system;
suppressing further transmission of one or more of the messages; and
transmitting an indication to the management system, based on data extracted from one or more of the messages.

4. A method according to any of claims 1 to 3, wherein the processing in respect of the messages comprises extracting data associated with a first data stream from one or more of the messages, the method further comprising:
transmitting, to one of the one or more agents, mapping information indicating how data associated with the first data stream is encoded within messages in the publish/subscribe messaging system.

5. A method according to any of claims 1 to 4, wherein the processing comprises generating, by an agent, one or more of the messages for publication, and
the instructions transmitted to the agent comprise an indication of one or more of a topic and a message format for the generated messages.

6. A method according to any of claims 1 to 5, wherein the processing comprises
generating, by a first agent of the one or more agents, a message for publication and
extracting, by a second agent of the one or more agents, data from the message generated by the first agent.

7. A method according to any of claims 1 to 6, wherein the selecting the one or more agents is based on the ability of the one or more agents to access the messages.

8. A method according to any of claims 1 to 7, wherein the processing comprises extracting data from one or more of the messages, and
the selecting the one or more agents is based on the relative locations within the publish/subscribe messaging system of the one or more agents and a publisher of the one or more messages.

9. A method according to any of claims 1 to 8, the method comprising:
determining a plurality of nodes in an information hierarchy, the nodes corresponding to respective data streams, the location of a node in the information hierarchy corresponding to a data stream in the information hierarchy being in accordance with a relative location of a data source, associated with the data stream, within a topology representing an arrangement of data sources,
associating, with each node, a node type selected from a set of pre-defined node types, each of the set of pre-defined node types defining one or more parameters, and
determining, for each node, a value of each of the parameters defined for nodes of the node type associated with the respective node.

10. A method according to claim 9, the method comprising generating at the management system, for an agent, an indication of a portion of the hierarchy associated with the agent and
transmitting the indication of the portion of the hierarchy associated with the agent to the agent.

11. A method according to claim 9 or claim 10, the method comprising displaying a representation of the information hierarchy on a user interface.

12. A method according to any of claims 9 to 11, wherein the determining the processing to be carried out in respect of messages within the publish/subscribe messaging system is based on the information hierarchy.

13. A method comprising:
receiving, at an agent of a publish/subscribe messaging system, instructions for processing to be carried out in respect of messages within the publish/subscribe messaging system, and
performing the processing in respect of the messages, wherein
the publish/subscribe system comprises a data broker which receives and publishes messages in accordance with a publish/subscribe messaging protocol, a publisher client which publishes messages in accordance with the publish/subscribe messaging protocol, and the agent.

14. A method according to claim 13, the method comprising:
receiving an indication of a portion of an information hierarchy, the information hierarchy comprising a plurality of nodes corresponding to respective data streams, the location of a node in the information hierarchy corresponding to a data stream in the information hierarchy being in accordance with a relative location of a data source, associated with the data stream, within a topology representing an arrangement of data sources.

15. A management system, comprising:
a network interface,
one or more memories, and
one or more processors,
the one or more memories having stored thereon instructions, which when executed by the one or more processors, cause the management system to:
determine, at the management system, processing to be carried out in respect of messages within a publish/subscribe messaging system,
select one or more agents within the publish/subscribe messaging system to perform the processing, and
transmit to the one or more agents respective instructions which cause the one or more agents to perform the processing in respect of the messages.
